(19) Europäisches Patentamt
European Patent Office
Office européen des brevets

(11) **EP 4 614 460 A1**

(12) **DEMANDE DE BREVET EUROPEEN**

(43) Date de publication:
**10.09.2025 Bulletin 2025/37**

(21) Numéro de dépôt: **25161118.2**

(22) Date de dépôt: **28.02.2025**

(51) Classification Internationale des Brevets (IPC):
*G06V 10/82* (2022.01)     *G06V 20/58* (2022.01)

(52) Classification Coopérative des Brevets (CPC):
**G06V 20/58; G06V 10/82**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **05.03.2024 FR 2402214**

(71) Demandeur: **Commissariat à l'Energie Atomique et aux Energies Alternatives**
**75015 Paris (FR)**

(72) Inventeurs:
• **DEFAUW, Nils**
**38054 GRENOBLE CEDEX 09 (FR)**
• **MALFANTE, Marielle**
**38054 GRENOBLE CEDEX 09 (FR)**
• **RAKOTOVAO ANDRIA, Tiana**
**38054 GRENOBLE CEDEX 09 (FR)**
• **ANTONI, Olivier**
**38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ ET DISPOSITIF DE SEGMENTATION D'OBJETS MATÉRIELS DANS UN ESPACE ENVIRONNANT UN ROBOT AUTONOME**

(57)     La présente invention concerne un procédé et un dispositif associé pour la segmentation d'objets matériels dans un espace environnant un robot autonome. En particulier, l'invention adresse un procédé basé sur l'analyse de spectres fréquentiels de grilles d'occupation par des réseaux de neurones denses pour segmenter les véhicules dans l'environnement d'un véhicule autonome.

FIG.5

**Description**

**Domaine de l'invention**

L'invention concerne le domaine technique de la reconnaissance d'objets, et porte plus particulièrement sur un procédé et un dispositif de segmentation d'objets matériels dans un espace environnant un robot autonome.

**Etat de la technique**

La reconnaissance d'objets matériels dans un espace environnant un robot autonome consiste généralement en l'interprétation de données fournies par différents capteurs situés sur le robot autonome dans le but de produire une modélisation de l'environnement immédiat du véhicule. Pour les applications aux véhicules, la modélisation de l'environnement relève du domaine de la perception pour la voiture autonome.

L'automatisation de la conduite dans le cadre du véhicule autonome est un défi de recherche majeur de notre temps. Un tel système doit conjuguer d'une part une très haute précision car une erreur peut mener à des accidents graves et d'autre part le système doit être en mesure de s'exécuter en temps réel sur des calculateurs embarqués à puissance de calcul limitée. Aussi, la reconnaissance d'autres véhicules présents dans l'environnement d'un véhicule autonome revêt une importance particulière.

Pour permettre une localisation précise des obstacles, un véhicule autonome est équipé de capteurs de distance (« range sensors » selon l'anglicisme consacré) tels que des 'LiDARs' (acronyme de « Light Detection And Ranging »), des radars, des sonars ou encore des caméras stéréoscopiques. Ces capteurs ont pour particularité leur capacité à positionner les obstacles dans l'espace via la mesure de leur distance et de leur position angulaire par rapport à celle du capteur.

Chacun de ces types de capteur a ses propres avantages et ses propres limites, les caméras stéréoscopiques par exemple ne fonctionnent que de jour tandis que les LiDARs voient leur acuité dégradée en cas de pluie. Pour permettre une fiabilité maximale en toute circonstance, ces capteurs sont généralement utilisés en association sur les véhicules autonomes. Un procédé de fusion et d'interprétation de données, appelé perception, permet d'assembler les mesures provenant des différents capteurs.

La tâche de perception est réalisée en temps réel par un ordinateur embarqué à bord du véhicule autonome. Les contraintes en termes de coût, de consommation électrique et de volume occupé par l'ordinateur de bord limitent fortement les ressources de calcul disponibles. Ainsi, l'ensemble des calculs réalisés lors de la tâche de perception doivent être suffisamment légers pour permettre leur exécution en temps réel sur ce matériel fortement contraint. La représentation résultante de ce processus de perception est une représentation numérique de la scène dans laquelle se trouve le véhicule autonome, et elle est appelée modèle d'environnement.

Il existe des modèles d'environnement génériques permettant la fusion de plusieurs capteurs hétérogènes en une unique représentation de l'environnement. La grille d'occupation bidimensionnelle est l'un de ces modèles d'environnement d'intérêt couramment utilisé dans le contexte du véhicule autonome et plus généralement de la robotique mobile.

La grille d'occupation bidimensionnelle offre comme avantages la possibilité de fusionner les mesures issues de différents capteurs en une unique grille, la possibilité de représenter l'incertitude d'occupation issue de mesures bruitées ou de la fusion de données contradictoires et finalement un coût de calcul faible compatible avec les contraintes matérielles importantes du véhicule autonome.

Une grille d'occupation est un modèle informatique d'environnement couramment utilisé en robotique et en conduite autonome. Il s'agit d'une représentation matricielle de l'environnement vu du dessus représentant de manière probabiliste l'occupation de l'espace par des obstacles.

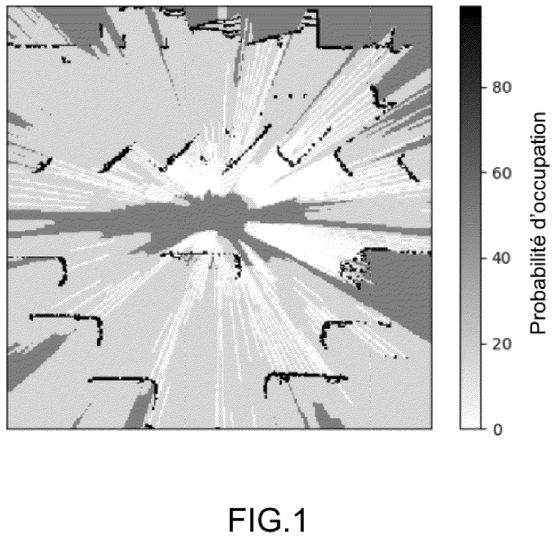

La figure 1 est une représentation discrétisée de l'environnement en vue de dessus (ou « Bird's Eye View » selon l'anglicisme consacré) d'un véhicule autonome, sous forme d'une grille d'occupation où les probabilités d'occupation sont représentées en différents niveaux de gris.

Chaque cellule de la matrice correspond à une portion de l'espace environnant le véhicule autonome et contient une probabilité d'occupation de cette portion d'espace. Une cellule d'une grille d'occupation est généralement définie en deux dimensions (2D), l'espace étant par exemple délimité par un carré de 10 cm × 10 cm. Une cellule est alors caractérisée par une valeur comprise entre 0 et 1, représentant la probabilité que la cellule soit occupée. Par exemple, une probabilité de 0 (représentée par un niveau de blanc) signifie que la cellule est vide à coup sûr, alors qu'une probabilité de 1 (représentée par un niveau de noir) signifie que la cellule contient à coup sûr un objet. Toutes les valeurs intermédiaires (différents niveaux de gris) quantifient l'incertitude sur l'état d'occupation de la cellule.

La collection de toutes les cellules, généralement des millions de cellules, forme la grille d'occupation.

La fusion des mesures des capteurs dans une grille d'occupation se fait en deux étapes. Dans une première étape, une grille d'occupation est construite pour chaque capteur en utilisant un modèle de bruit de mesure adapté. Dans une seconde étape, toutes les grilles d'occupation sont fusionnées en une grille unique à l'aide d'un processus de fusion Bayésienne. Lors de la fusion de deux cellules, la probabilité d'occupation de la cellule résultante est plus certaine (plus proche de 0 ou de 1) si les deux cellules fusionnées ont respectivement une probabilité d'occupation en accord quant à l'état d'occupation de la cellule. Dans le cas contraire, la probabilité d'occupation résultante est moins certaine (plus proche de 0,5). Ce processus synthétise les informations provenant des différents capteurs dans une représentation compacte. Les grilles d'occupation sont donc un modèle important pour la représentation de l'environnement en temps réel, qui est multimodal et prend en compte le bruit inhérent aux différents capteurs.

Le calcul des probabilités d'une grille d'occupation est généralement effectué à l'aide d'architectures parallèles telles que les GPU (acronyme de l'expression anglaise « Graphic Processing Unit »). Il a été récemment démontré que les grilles d'occupation peuvent être calculées et fusionnées en utilisant uniquement l'arithmétique des nombres entiers sur des microcontrôleurs de faible puissance, ce qui en fait un modèle d'environnement important pour la perception en temps réel dans des systèmes embarqués.

Cependant, les grilles d'occupation ne fournissent pas les informations essentielles à la navigation autonome, telles que la nature et la géométrie des différents obstacles présents dans une scène.

Afin de permettre l'usage de grilles d'occupation dans un contexte de navigation autonome, i.e. dans des systèmes d'assistance à la conduite autonome, il est nécessaire de développer des algorithmes permettant d'interpréter les grilles d'occupation avec un ordinateur de bord qui est soumis aux contraintes inhérentes au véhicule autonome, à savoir des contraintes de temps réel d'exécution et des contraintes d'un matériel limité en ressources de calcul.

La présente invention propose une solution répondant à ces contraintes pour la reconnaissance en temps réel de véhicules présents dans l'environnement immédiat d'un véhicule équipé de capteurs de distance.

Plus généralement, il est proposé une solution de segmentation d'objets matériels présents dans l'environnement d'un robot autonome.

**Description brève de l'invention**

L'invention vise un procédé (et un dispositif associé) pour segmenter des véhicules présents dans l'environnement d'un véhicule, qui est basé sur l'analyse de grilles d'occupation.

Plus généralement, l'invention a pour objet un procédé de segmentation d'objets matériels prédéfinis dans un espace environnant un robot autonome.

Le procédé de l'invention présente une nouvelle approche qui permet une réduction de la dimensionnalité des grilles d'occupation via une transformation de la grille d'occupation dans le domaine fréquentiel.

De manière nouvelle, la présente invention permet d'effectuer une segmentation de grilles d'occupation à l'aide de réseaux de neurones denses fonctionnant dans le domaine fréquentiel, offrant ainsi des segmentations de qualité avec un coût calculatoire restreint.

La présente invention a aussi pour objet un réseau de neurones dense utilisant en entrée une représentation spectrale de faible dimension d'une grille d'occupation, et permettant en sortie du réseau d'effectuer une segmentation des véhicules ou des objets présents dans la grille d'occupation dans le même espace spectral de faible dimension.

De manière avantageuse, la présente invention nécessite moins de puissance de calcul et permet d'obtenir des gains importants en termes de coût calculatoire, ce qui permet d'envisager une implémentation dans un véhicule autonome.

L'invention peut être appliquée à tout type de robots, par exemple des robots terrestres (voitures autonomes), des robots aériens (drones), des robots sous-marins, etc.

A cet effet, il est proposé un procédé de segmentation d'objets matériels dans un espace environnant un robot autonome, le procédé étant mis en œuvre par ordinateur dans une phase d'inférence.

Dans un mode de réalisation, le procédé comprend des étapes consistant à :

- recevoir sous la forme d'une grille d'occupation des données relatives à l'environnement du robot autonome, une grille d'occupation fournissant une représentation spatiale discrétisée d'un environnement dont chaque cellule correspondant à une zone de l'environnement contient une probabilité estimée de la présence d'un objet dans cette zone;

- transformer la grille d'occupation spatiale en une représentation spectrale, les coefficients du spectre de la grille d'occupation correspondant à des composantes fréquentielles associées aux données de la grille d'occupation ;

- réduire la dimension du spectre de la grille d'occupation par application d'un masque fréquentiel conservant les coefficients du spectre ayant une contribution à la grille d'occupation la plus élevée ;

- exécuter un algorithme d'intelligence artificielle sur le spectre de la grille d'occupation compressé, ledit algorithme d'intelligence artificielle mettant en œuvre un réseau de neurones constitué de couches denses, entrainé lors d'une phase d'apprentissage, pour produire un spectre résultant correspondant à une prédiction dans le domaine spectral d'une segmentation de la grille d'occupation ;

- segmenter la grille d'occupation originale par application d'une transformée inverse projetant le spectre résultant dans le domaine spatial; et

- identifier des objets matériels dans l'espace environnant le robot autonome à partir de la segmentation.

Dans un mode de réalisation, l'étape de réception de données d'environnement comprend une étape consistant à recevoir des données issues d'au moins un capteur de distance embarqué sur ledit robot autonome, et une étape consistant à transformer les données capteur en données représentatives de probabilités d'occupation d'une grille d'occupation.

Dans un autre mode de réalisation, l'étape de transformation dans le domaine fréquentiel consiste à appliquer une transformée en cosinus discrète.

Dans une variante de réalisation, le spectre obtenu à l'étape de transformation contient l'amplitude de chaque fréquence indexée sur deux dimensions.

Dans une variante de réalisation, l'étape de réduction de dimension consiste à appliquer un masque fréquentiel permettant de conserver des fréquences déterminées.

Dans une variante de réalisation, le masque fréquentiel est un masque appris par apprentissage sur le jeu de données d'entrainement du réseau de neurones dense, et supprimant les fréquences contenant le moins d'informations sur les grilles d'occupation.

Dans une variante de réalisation, le réseau de neurones comprend des couches denses de tailles d'entrée et de sortie égales.

Dans une variante de réalisation, l'étape d'exécution d'un algorithme d'intelligence artificielle comprend une étape consistant à générer un vecteur unidimensionnel de coefficients de fréquence pour le spectre de la grille d'occupation, à fournir ce vecteur en entrée du réseau de neurones dense et à obtenir un spectre résultant.

Dans une variante de réalisation, la phase d'apprentissage du réseau de neurones dense comprend au moins : une étape de segmentation d'une grille d'occupation à partir de boîtes englobantes vérité terrain ; une étape de transformation de la grille d'occupation segmentée en un vecteur unidimensionnel de coefficients de fréquence ; une étape de comparaison avec le vecteur unidimensionnel de coefficients de fréquence du spectre de segmentation de la grille d'occupation d'origine obtenu par inférence du réseau de neurones dense ; et une étape de mise à jour des poids des neurones du réseau.

Un autre objet de l'invention concerne un dispositif de segmentation d'objets matériels dans un espace environnant un robot autonome, comprenant des moyens pour mettre en œuvre les étapes du procédé de l'invention.

L'invention porte aussi sur un véhicule autonome embarquant un système d'assistance à la conduite, ledit système comprenant un dispositif configuré pour reconnaître des véhicules dans l'environnement du véhicule autonome.

L'invention adresse aussi un programme d'ordinateur comprenant des instructions de code qui, lorsque le programme est exécuté par un ordinateur, conduisent celui-ci à mettre en œuvre le procédé de segmentation d'objets matériels de l'invention.

**Brève description des figures**

D'autres caractéristiques, détails et avantages de l'invention ressortiront à la lecture de la description faite en référence aux dessins annexés donnés à titre d'exemple et qui représente :

La figure 1 illustre sous forme d'une grille d'occupation, une représentation discrétisée de l'environnement d'un véhicule autonome en vue de dessus.

La figure 2 est un organigramme des étapes du procédé de l'invention de segmentation d'objet matériel selon un mode de réalisation.

La figure 3 illustre la transformation d'une grille d'occupation du domaine spatial en spectre de grille d'occupation du domaine fréquentiel.

La figure 4 illustre l'utilisation de différents masques pour compresser un spectre d'une grille d'occupation en un spectre de nombre de dimensions réduit selon le procédé de l'invention, pour différentes valeurs desdites dimensions.

La figure 5 est une représentation de flux pour un mode d'apprentissage et pour un mode d'inférence, selon le procédé de l'invention.

**Description détaillée de l'invention**

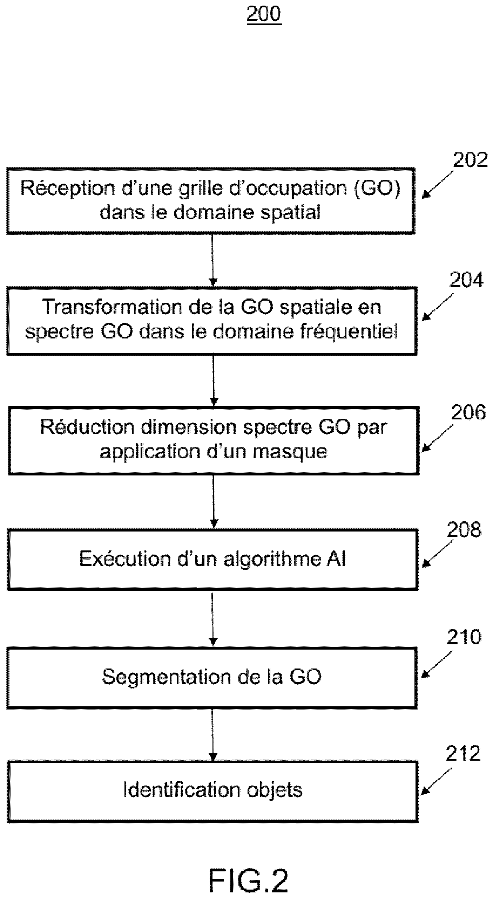

La figure 2 est un organigramme des étapes du procédé de segmentation d'objets matériels de l'invention.

Les étapes du procédé 200 de l'invention sont mises en œuvre par un ordinateur, en mode d'inférence, et permettent la segmentation d'objets matériels dans l'environnement d'un robot autonome.

Le procédé de l'invention peut être opéré comme un programme d'ordinateur comprenant des instructions de code qui, lorsque le programme est exécuté par un ordinateur, conduisent celui-ci à mettre en œuvre le procédé de segmentation d'objets matériels de l'invention.

Dans un mode de réalisation, et pour faciliter la description, un tel robot autonome est considéré être un véhicule autonome, et le procédé 200 est mis en œuvre par un processeur d'un système d'assistance à la conduite autonome qui est configuré pour segmenter en temps réel des véhicules présents dans son environnement.

La segmentation en temps réel du procédé de l'invention s'entend comme étant du temps réel par rapport à la fréquence de production des données au niveau des capteurs de distance équipant le véhicule autonome à partir desquels des grilles d'occupation sont produites.

Une première étape 202 du procédé consiste à recevoir des données relatives à l'environnement du véhicule autonome sous la forme d'une grille d'occupation. Les données sont ainsi des valeurs représentatives de probabilités d'occupation pour chaque cellule de la grille d'occupation.

Dans un mode de réalisation, les données d'environnement reçues sont générées à partir de données issues d'au moins un capteur de distance embarqué sur le véhicule autonome, et le procédé peut comprendre une étape préliminaire consistant à transformer les données capteur en données représentatives de probabilités d'occupation pour une grille d'occupation.

Dans un mode de réalisation où le véhicule autonome embarque plusieurs capteurs de distance, le procédé permet, avant l'étape de transformation des données capteur en données représentatives de probabilités d'occupation d'une grille d'occupation, de fusionner les données reçues des différents capteurs. Le processus de fusion peut être un processus de type Bayésien et prendre en compte les bruits des capteurs et les incertitudes.

Après réception de données de la grille d'occupation représentative de l'environnement du véhicule autonome, le procédé dans une étape suivante 204 de prétraitement, permet une transformation de la grille d'occupation du domaine spatial au domaine fréquentiel.

Avantageusement, le prétraitement des grilles d'occupation proposé, permet de remplacer les coûteuses couches de convolution des réseaux de neurones convolutifs, par des algorithmes de traitement peu coûteux et capables de résumer l'information contenue dans les grilles d'occupation en un plus petit nombre de dimensions.

Dans un mode de réalisation, il est fait usage d'une transformée en cosinus discrète (DCT pour « Discrete Cosine Transform » selon l'anglicisme consacré) pour effectuer une projection des grilles d'occupation du domaine spatial vers le domaine fréquentiel, et obtenir un spectre de grille d'occupation.

L'homme du métier connaissant la transformée de Fourier rapide (FFT) pour la transformation d'images, sait que la transformée en cosinus discrète (DCT) produit les mêmes types de spectre que la FFT mais avec des coefficients réels.

Avantageusement de manière innovante, les inventeurs proposent d'utiliser la transformée en cosinus discrète pour obtenir une représentation fréquentielle d'une grille d'occupation afin de faciliter la reconnaissance d'objets matériels dans une scène.

Par exemple, une grille d'occupation composée de cellules $(x_{i,j})0 \leq i,j \leq 255$, peut être transformée en un spectre $(y_{k,l})0 \leq k,l \leq 255$ de même taille par l'application de la transformée en cosinus discrète rapide, selon l'équation suivante :

$$y_{k,l} = 4 \sum_{i=0}^{255} \sum_{j=0}^{255} x_{i,j} \cos\left(\frac{\pi k(4i+1)}{512}\right) \cos\left(\frac{\pi l(4j+1)}{512}\right)$$

Le spectre obtenu contient l'amplitude de chaque fréquence indexée selon deux dimensions.

Bien que cette représentation duale soit de même taille que la grille d'occupation originale, elle présente pour principal avantage que les basses fréquences contiennent la plupart de l'information issue de la grille d'occupation originale.

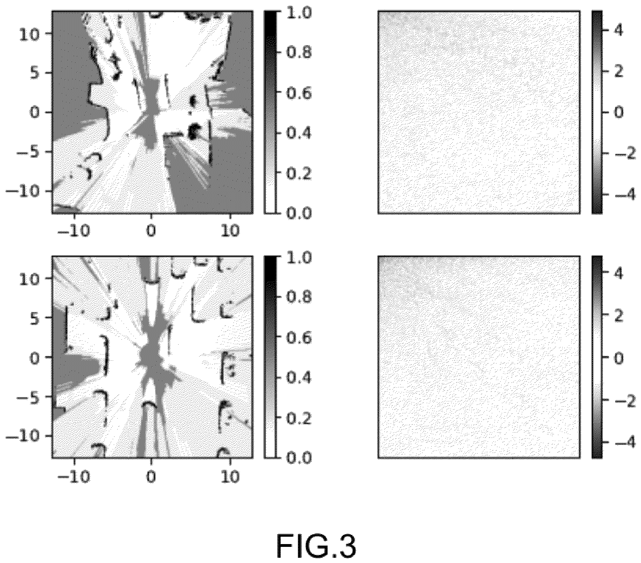

La figure 3 illustre la transformation d'une grille d'occupation du domaine spatial présentée à gauche en spectre de grille d'occupation du domaine fréquentiel présenté à droite, par application d'une transformée en cosinus discrète. Les valeurs du spectre sont représentées par leur logarithme en base 10. La fréquence augmente depuis le coin supérieur gauche du spectre jusqu'au coin inférieur droit.

Le spectre d'une grille d'occupation obtenu par application de la transformée en cosinus discrète est, à la différence des grilles d'occupation, une représentation dans le domaine fréquentiel et non pas dans le domaine spatial. Ce changement de domaine implique la perte de la propriété de localité de l'information, et le traitement d'un spectre doit se faire par des réseaux de neurones qui peuvent l'exploiter directement, ce que ne permettent pas les réseaux de neurones convolutifs.

Le procédé de l'invention met en œuvre des réseaux de neurones composés de couches denses.

Dans un mode de réalisation, le réseau de neurones comprend des couches denses de tailles d'entrée et de sortie égales.

Alternativement, l'architecture du réseau de neurones dense peut être construite pour opérer avec des couches denses de tailles d'entrée et de sortie différentes.

Cependant, les couches denses ont un nombre de poids entraînables et donc un coût de stockage mémoire qui augmente linéairement avec la taille de leur entrée.

En considérant 'D' une couche dense à x entrées et y sorties, le nombre de poids de la couche D est : #D = (x + 1)y.

Aussi, dans une étape suivante 206, le procédé permet de réduire la taille des spectres de grille d'occupation pour s'assurer une faible empreinte mémoire des réseaux de neurones denses utilisés, tout en conservant le maximum d'informations sur la grille d'occupation originale.

Le spectre d'une grille d'occupation obtenu par transformée en cosinus discrète est de même dimension que la grille d'occupation, soit par exemple 256 $\times$ 256 = 65536 dimensions.

Dans un mode de réalisation, la réduction de dimension peut être effectuée par l'application d'un masque sur le spectre original, mettant à zéro les coefficients de toutes les fréquences masquées.

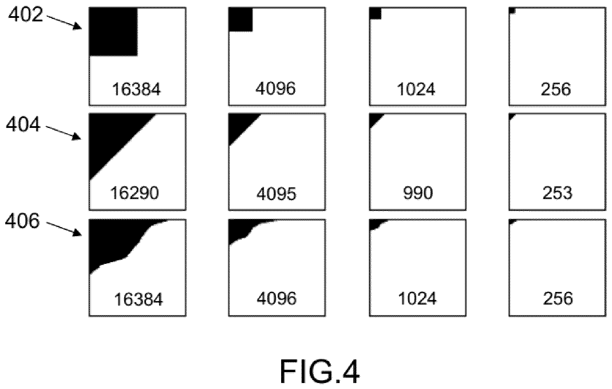

La figure 4 illustre l'utilisation de différents masques pour compresser un spectre de grille d'occupation selon le procédé de l'invention, pour différentes valeurs de dimensions.

Il est proposé de haut en bas trois familles de masques (carrés, triangulaires, appris) qui peuvent se décliner en divers masques en fonction de la dimension 'd' résultante souhaitée. Le nombre de coefficients conservés sur le spectre compressé est indiqué dans chaque boite.

Dans un mode de réalisation montré sur la ligne 402, une famille de masques carrés définie par l'expression : $m_{k,l}$ = 0 $\Leftrightarrow$ (k > c) v (l > c), avec c obtenu par la formule :

$$c = \lfloor \sqrt{d} \rfloor$$

peut être appliquée.

Dans un mode de réalisation montré sur la ligne 404, une famille de masques triangulaires définie par l'expression : $m_{k,l}$ = 0 $\Leftrightarrow$ k + l - 1 > c , avec c obtenu par la formule :

$$c = \lfloor \sqrt{2d + 0.25} - 0.5 \rfloor$$

peut être appliquée.

Dans un mode de réalisation montré sur la ligne 406, une famille de masques appris définis à partir de grilles d'occupation contenues dans un jeu de données d'entraînement, peut être appliquée.

Dans un premier temps, les spectres $y_{k,l}$ de chaque grille d'occupation sont calculés. La contribution de chaque coefficient à chaque grille d'occupation est définie comme :

$$\hat{y}_{k,l} = \frac{|y_{k,l}|}{\sum_{i,j=1}^{256} |y_{i,j}|}.$$

Les contributions individuelles de chaque fréquence sont ensuite moyennées sur l'ensemble des grilles d'occupation du jeu de données. Finalement, pour une dimension de sortie 'd' choisie, les 'd' fréquences ayant la contribution la plus élevée sont conservées dans le masque tandis que les coefficients des autres fréquences sont mis à zéro. Une procédure de normalisation, appelée normalisation par contribution, est appliquée sur chaque spectre de grille d'occupation avant le calcul de la contribution. Cette procédure permet de s'assurer que chaque coefficient représente effectivement la contribution de la fréquence à la grille d'occupation.

On peut observer sur la figure 4 que le nombre de dimensions des masques triangulaires est généralement légèrement inférieur au nombre de dimensions des masques carrés et des masques appris. Ce phénomène est dû au nombre de dimensions des masques triangulaires de la forme d = c(c + 1)/2 qui restreint d à certaines valeurs possibles.

Revenant à la figure 2, après l'étape de réduction de la dimensionnalité du spectre de grille d'occupation par application d'un masque de fréquences, l'étape suivante 208 du procédé permet l'exécution d'un algorithme d'intelligence artificielle basé sur un réseau de neurones dense entrainé lors d'une phase d'apprentissage supervisé.

Les entrées du réseau de neurones dense sont des spectres des grilles d'occupation, tronqués à l'aide d'un filtre fréquentiel.

Dans un mode de réalisation préférentiel pour l'application véhicule autonome, le filtre est un masque appris.

L'objectif de reconnaissance d'autres véhicules présents dans une scène, amène que la sortie d'un réseau de neurone doive encoder une telle information. Dans le contexte de l'invention, d'un réseau de neurone dense utilisant des entrées dans le domaine fréquentiel, la sortie du réseau encode l'information dans le domaine fréquentiel sous la forme d'une segmentation des véhicules.

L'usage de couches denses dans un réseau de neurones amène rapidement à un coût calculatoire et mémoire important peu compatible avec les objectifs de légèreté des calculs inhérents à la navigation autonome sur plateforme embarquée. Aussi, les inventeurs ont développé une architecture nouvelle comportant le moins de couches denses possibles, mais néanmoins capable d'exploiter les spectres tronqués de grilles d'occupation pour identifier les véhicules présents dans une scène.

Chaque spectre de grille d'occupation est mis à plat en un vecteur de coefficients unidimensionnel. L'ordre dans lequel les différents coefficients sont ordonnés dans le vecteur unidimensionnel est sans importance, étant donné que celui-ci est utilisé en entrée d'une couche dense qui ne fait pas de supposition quant à l'ordre des caractéristiques reçues en entrée, i.e. pas de supposition de propriété de localité dans les données d'entrée.

L'exécution de l'algorithme d'IA produit un spectre résultant qui va être utilisé pour reconstruire à l'aide de la transformée en cosinus discrète inverse, une grille pouvant être utilisée, dans une étape suivante 210, pour segmenter les cellules de la grille d'occupation originale correspondant à des véhicules.

Le procédé se termine par une étape 212 permettant l'identification des véhicules présents sur la grille d'occupation via l'interprétation de la grille obtenue par transformée en cosinus discrète inverse en une segmentation des véhicules.

Ainsi avantageusement, la présente invention combine l'utilisation de spectres de grilles d'occupation, i.e. dans le domaine fréquentiel, avec des méthodes d'apprentissage profond, i.e. des réseaux de neurones denses, pour faciliter la reconnaissance d'objets matériels présents dans l'environnement d'un robot autonome.

Dans le contexte de la conduite autonome, les travaux des inventeurs ont aussi porté sur l'entraînement d'un réseau de neurones dense capable de segmenter les véhicules présents sur une grille d'occupation à partir d'une représentation fréquentielle de faible dimension de la grille d'occupation originale.

L'entraînement d'un réseau de neurones équivaut à l'élaboration d'une fonction permettant d'identifier, d'extraire, de transformer des motifs pertinents dans des données d'entrée pour la réalisation d'une tâche attendue.

La phase d'apprentissage a pour spécificité l'utilisation de réseaux de neurones comme fonctions paramétriques à optimiser à l'aide d'un algorithme efficace de descente de gradient (connu sous le nom d'algorithme de rétropropagation) pour des jeux de données d'entraînement.

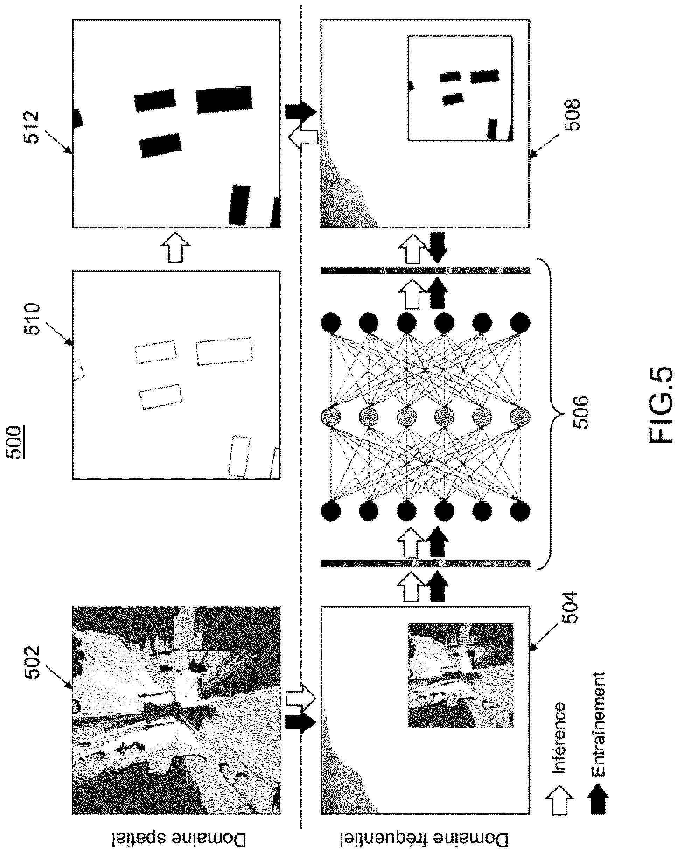

La figure 5 est une représentation de flux pour un mode d'apprentissage (ou d'entrainement, comme indiqué en légende) et pour un mode d'inférence, selon le procédé de l'invention.

Durant l'entrainement, il est initialement extrait des informations d'une grille d'occupation 502 (domaine spatial) pour obtenir à l'aide de la transformée en cosinus discrète, une représentation spectrale (domaine fréquentiel).

Puis le spectre est masqué (504) à l'aide du masque (appris sur les données d'entraînement pour le masque appris), et le spectre est mis à plat en un vecteur unidimensionnel.

Pour permettre aux sorties du réseau de neurone dense d'encoder les positions des véhicules, le choix a été fait d'encoder les véhicules sous la forme d'une segmentation de la grille d'occupation générée à partir de boîtes englobantes vérités terrain.

Ainsi, dans le même temps que le prétraitement des grilles d'occupation, des boîtes englobantes vérité terrain (510) sont utilisées pour produire une segmentation (512) de la grille d'occupation.

Cette segmentation est ensuite projetée dans le domaine fréquentiel de la même manière que pour les grilles d'occupation et le réseau de neurones est entraîné à reproduire ces spectres de segmentation de grille d'occupation en sortie à partir des spectres de grilles d'occupation en entrée.

Les spectres de segmentation sont transformés en vecteurs unidimensionnels de coefficients de fréquence par le même procédé (508) que pour la grille d'occupation d'origine.

Le vecteur unidimensionnel du spectre de la grille d'occupation d'origine passe dans le réseau de neurones (506) et le résultat est comparé avec le vecteur unidimensionnel du spectre de la segmentation pour calculer un gradient et mettre à jour les poids des neurones du réseau.

Durant l'inférence, le spectre résultant du réseau de neurones (étape 208) est décodé en une segmentation de la grille d'occupation (étape 212).

Le procédé de l'invention peut être implémenté dans un dispositif de segmentation d'objets matériels dans un espace environnant un robot autonome, ce dispositif comprenant des moyens appropriés pour mettre en œuvre toutes les étapes du procédé de l'invention.

Il a ainsi été décrit un procédé et un dispositif associé pour la segmentation d'objets matériels dans un espace environnant un robot autonome. Les caractéristiques du procédé portent sur une compression dans le domaine fréquentiel de grilles d'occupation, leur inférence dans un réseau de neurones dense, et une prédiction toujours dans le domaine spectral d'une segmentation de la grille d'occupation.

Les caractéristiques portent aussi sur une méthode de conception d'un masque optimal par apprentissage conservant le maximum d'informations d'une grille d'occupation pour une taille de masque donnée.

Les bénéfices de l'invention sont des coûts calculatoires très faibles comparativement aux méthodes basées sur des réseaux convolutifs, et que ces coûts sont paramétrables grâce au choix qui peut être fait de la dimension du spectre.

Ainsi, avantageusement, dans une optique de traitement à distance, le procédé proposé permet qu'il ne soit envoyé vers un véhicule autonome qu'une version compressée de la grille d'occupation pour exécuter l'algorithme d'IA.

## Revendications

1. Procédé (200) de segmentation d'objets matériels dans un espace environnant un robot autonome, le procédé étant mis en œuvre par ordinateur dans une phase d'inférence, et comprenant des étapes de :

   recevoir (202) sous la forme d'une grille d'occupation des données relatives à l'environnement du robot autonome, une grille d'occupation fournissant une représentation spatiale discrétisée d'un environnement dont chaque cellule correspondant à une zone de l'environnement contient une probabilité estimée de la présence d'un objet dans cette zone;
   transformer (204) la grille d'occupation spatiale en une représentation spectrale, les coefficients du spectre de la grille d'occupation correspondant à des composantes fréquentielles associées aux données de la grille d'occupation ;
   réduire (206) la dimension du spectre de la grille d'occupation par application d'un masque fréquentiel conservant les coefficients du spectre ayant une contribution à la grille d'occupation la plus élevée ;
   exécuter (208) un algorithme d'intelligence artificielle sur le spectre de la grille d'occupation compressé, ledit algorithme d'intelligence artificielle mettant en œuvre un réseau de neurones constitué de couches denses, entrainé lors d'une phase d'apprentissage, pour produire un spectre résultant correspondant à une prédiction dans le domaine spectral d'une segmentation de la grille d'occupation ;
   segmenter (210) la grille d'occupation originale par application d'une transformée inverse projetant le spectre résultant dans le domaine spatial; et
   identifier (212) des objets matériels dans l'espace environnant le robot autonome à partir de la segmentation.

2. Le procédé selon la revendication 1 dans lequel l'étape (202) de réception de données d'environnement comprend une étape consistant à recevoir des données issues d'au moins un capteur de distance embarqué sur ledit robot autonome, et une étape consistant à transformer les données capteur en données représentatives de probabilités d'occupation d'une grille d'occupation.

3. Le procédé selon la revendication 1 ou 2 dans lequel l'étape (204) de transformation dans le domaine fréquentiel consiste à appliquer une transformée en cosinus discrète.

4. Le procédé selon l'une quelconque des revendications 1 à 3 dans lequel le spectre obtenu à l'étape (204) de transformation contient l'amplitude de chaque fréquence indexée sur deux dimensions.

5. Le procédé selon l'une quelconque des revendications 1 à 4 dans lequel l'étape (206) de réduction de dimension consiste à appliquer un masque fréquentiel permettant de conserver des fréquences déterminées.

6. Le procédé selon l'une quelconque des revendications 1 à 5 dans lequel le masque fréquentiel est un masque appris par apprentissage sur le jeu de données d'entrainement du réseau de neurones dense, et supprimant les fréquences contenant le moins d'informations sur les grilles d'occupation.

7. Le procédé selon l'une quelconque des revendications 1 à 6 dans lequel le réseau de neurones comprend des couches denses de tailles d'entrée et de sortie égales.

8. Le procédé selon l'une quelconque des revendications 1 à 7 dans lequel l'étape (208) d'exécution d'un algorithme d'intelligence artificielle comprend une étape consistant à générer un vecteur unidimensionnel de coefficients de fréquence pour le spectre de la grille d'occupation, à fournir ce vecteur en entrée du réseau de neurones dense et à obtenir un spectre résultant.

9. Le procédé selon l'une quelconque des revendications 1 à 8 dans lequel la phase d'apprentissage du réseau de neurones dense comprend au moins : une étape de segmentation d'une grille d'occupation à partir de boîtes englobantes vérité terrain ; une étape de transformation de la grille d'occupation segmentée en un vecteur unidimensionnel de coefficients de fréquence ; une étape de comparaison avec le vecteur unidimensionnel de coefficients de fréquence du spectre de segmentation de la grille d'occupation d'origine obtenu par inférence du réseau de neurones dense ; et une étape de mise à jour des poids des neurones du réseau.

10. Un programme d'ordinateur comportant des instructions de code pour l'exécution des étapes du procédé selon l'une quelconque des revendications 1 à 9, lorsque ledit programme est exécuté par un processeur.

11. Un dispositif de segmentation d'objets matériels dans un espace environnant un robot autonome, comprenant des moyens pour mettre en œuvre les étapes du procédé selon l'une quelconque des revendications 1 à 9.

12. Un véhicule autonome embarquant un système d'assistance à la conduite comprenant un dispositif de segmentation selon la revendication 11, le dispositif étant configuré pour segmenter des véhicules dans un espace environnant le véhicule autonome.

FIG.1

_200_

Réception d'une grille d'occupation (GO) dans le domaine spatial — 202

Transformation de la GO spatiale en spectre GO dans le domaine fréquentiel — 204

Réduction dimension spectre GO par application d'un masque — 206

Exécution d'un algorithme AI — 208

Segmentation de la GO — 210

Identification objets — 212

FIG.2

FIG.3

FIG.4

FIG.5

Europäisches
Patentamt

European
Patent Office

Office européen
des brevets

## RAPPORT DE RECHERCHE EUROPEENNE

**Numéro de la demande**

EP 25 16 1118

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PIEWAK FLORIAN ET AL: "Fully convolutional neural networks for dynamic object detection in grid maps", 2017 IEEE INTELLIGENT VEHICLES SYMPOSIUM (IV), IEEE, 11 juin 2017 (2017-06-11), pages 392-398, XP033133783, DOI: 10.1109/IVS.2017.7995750 * page 392, colonne 1, ligne 1 - page 398, colonne 1, dernière ligne; figures 1-10 * | 1-12 | INV. G06V10/82 G06V20/58 |
| A | WADA KENTARO ET AL: "3D object segmentation for shelf bin picking by humanoid with deep learning and occupancy voxel grid map", 2016 IEEE-RAS 16TH INTERNATIONAL CONFERENCE ON HUMANOID ROBOTS (HUMANOIDS), IEEE, 15 novembre 2016 (2016-11-15), pages 1149-1154, XP033036165, DOI: 10.1109/HUMANOIDS.2016.7803415 * page 1149, colonne 1, ligne 1 - page 1154, colonne 1, dernière ligne; figures 1-9 * | 1-12 | |
| A | ALEXANDER SCHAEFER ET AL: "DCT Maps: Compact Differentiable Lidar Maps Based on the Cosine Transform", ARXIV.ORG, CORNELL UNIVERSITY LIBRARY, 201 OLIN LIBRARY CORNELL UNIVERSITY ITHACA, NY 14853, 23 octobre 2019 (2019-10-23), XP081520475, DOI: 10.1109/LRA.2018.2794602 * page 392, colonne 1, ligne 1 - page 398, colonne 1, dernière ligne; figures 1-10 * | 1-12 | |

**DOMAINES TECHNIQUES RECHERCHES (IPC)**

G06V

Le présent rapport a été établi pour toutes les revendications

| Lieu de la recherche | Date d'achèvement de la recherche | Examinateur |
|---|---|---|
| La Haye | 6 mars 2025 | Thibault, Guillaume |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................................

& : membre de la même famille, document correspondant

EPO FORM 1503 03.82 (P04C02)